# EUROPEAN PATENT APPLICATION

(11) **EP 4 571 437 A1**
(43) Date of publication of application: **18.06.2025**
(21) Application number: 23307183.6
(22) Date of filing: 12.12.2023
(51) Int. Cl.: G05B 19/042

(54) **FIELD BUS SYSTEM**

(71) Applicant: SCHNEIDER ELECTRIC INDUSTRIES SAS, 92500 Rueil-Malmaison (FR)
(72) Inventor: WÜRR, Marcus, 63920 Großheubach (DE); KEMPF, Johannes, 63920 Großheubach (DE)
(74) Representative: Manitz Finsterwald Patent- und Rechtsanwaltspartnerschaft mbB

(57) **Abstract**

The invention relates to a field bus system for execution of at least one application, in particular for industrial automation, the field bus system comprising: a first device, in particular a first sensing device, configured to provide and transmit first device data, at least a second device, in particular a second sensing device, configured to provide and transmit second device data, a controller for computation of output data from the device data, at least a first target equipment controllable by the output data, a field bus, in particular a Sercos bus, and a scheduling unit for scheduling the execution of the application, wherein the devices, the controller and the first target equipment are connected via the field bus for communication with the scheduling unit, and wherein the scheduling unit is configured to determine impact parameters which impact an application response time of the bus system, and to schedule the execution considering the impact parameters.

## Description

The invention relates to a field bus system for execution of at least one application, in particular for industrial automation. The field bus system comprises as participants a first device, in particular a first sensing device, configured to provide first device data and transmit (TX) the first device data, at least a second device, in particular a second sensing device, configured to provide and transmit second device data, a controller configured to compute output data from the device data, at least a first target equipment configured to be controlled by the output data, and a field bus, in particular a Sercos bus, wherein the devices, the controller, and the first target equipment are connected via the field bus for communication.

Bus systems, in particular for industrial automation, typically comprise one or more field busses interconnecting several field bus devices such as sensors and machining tools. For instance, in a drilling application, a sensor may capture the depth of a drill hole as input data from which output data can be computed, which in turn is used to control a drilling machine that drills the hole to achieve a specific drilling depth.

However, sensors can take a non-negligible amount of time to capture and provide their input data. Moreover, for example, the processing of input data captured by sensors and computing output data therefrom, for example by means of a programmable logic controller (PLC), to control a target equipment, can take a non-negligible amount of time. Furthermore, applying output data to a target equipment, i.e., receiving the output data and implementing the commands associated with the output data by the target equipment (e.g. setting of an actor, adjustment of a sensor etc.), can take a non-negligible amount of time. In addition, due to the architecture of a bus system, propagation times of signals/data on the bus system may not be negligible. In an application executed on a bus system, capturing of input data, processing of the input data (e.g. preparing the input data for transmission on a field bus), computing output data from the input data, and applying the output data to a target equipment is carried out during a so-called cycle of the application, which is usually repeated multiple times.

However, particularly for the aforementioned reasons, the time offset between the start and end of a cycle of an application can be significant for the application. Moreover, such a time offset can cause a response of a target equipment, i.e., a reaction of the target equipment due to applying output data to the target equipment, to be significantly delayed from the start of the cycle, which can reduce the performance of the bus system. Such a delay in the response of a target equipment from the start of the cycle is called an application response time of the bus system.

One possibility to improve the performance is the usage of optimized hardware with a low cycle time. However, this requires a high-performance bus system with high bandwidth and leads to a high processing load, e.g. of a central processing unit of a programmable logic controller.

Therefore, it is an object of the invention to provide a bus system with improved performance, in which the drawbacks known from the prior art do not occur.

This object is solved by a bus system with the features of claim 1, and in particular by a scheduling unit for scheduling the execution of the application, wherein the scheduling unit is also connected with the devices, the controller, and the first target equipment for communication. Therefore, the scheduling unit can be connected with the devices, the controller, and the first target equipment via the field bus. Alternatively or additionally, the scheduling unit can be integrated in an engineering system that can be connected to the controller, and in particular to the devices and the first target equipment, via other wire connections (typically via an ethernet connection between the controller and a computer (PC) acting as engineering station) or other means, e.g. wireless. However, the scheduling unit can also be configured as a standalone product which is connected to the controller, and in particular to the devices and the first target equipment. Furthermore, the scheduling unit can be integrated in the controller and configured for communication with the controller via internal connections, wherein the controller in turn can communicate with the devices and the first target equipment via the field bus. It is understood that the scheduling unit can also be a participant of the bus system. The scheduling unit is configured to determine impact parameters of the bus system which impact an application response time of the of the bus system, i.e. of the application executed on the bus system, wherein the scheduling unit is further configured to schedule the execution of the application considering the impact parameters, in particular such that the application response time is short. The application comprises capturing of input data, processing of the input data (e.g. preparing input data for transmission on a field bus), transmittal of the input data from the devices to the controller, computation of output data on basis of the input data in the controller, transmittal of output data from the controller to the first target equipment and applying the transmitted output data to the first target equipment. In general, data can be transmitted split or grouped into transmission blocks or packages.

In this invention, it has been identified that measures which reduce the application response time can lead to improved application execution (performance), in particular on the same hardware. By realizing such measures, also hardware with low performance can be used which compensates for the reduction in application response time that can be achieved by the measures taken, i.e., a similar application response time can be achieved even though low performance hardware is used. In both cases, the performance of the respective bus system can be improved.

Since the scheduling unit is configured to determine the impact parameters and to schedule the execution of the application considering the impact parameters, it can e.g. prioritize certain processes of the application (depending on the individual impact parameters) to enable the application response time to be short. A particular advantage of the invention is that the scheduling unit can be configured to consider information relating to several, in particular all, participants of the bus system by means of the impact parameters, which enables a particularly optimized execution of the application with respect to a short application response time.

Thus, the invention enables the application response time to be short even if low performance hardware (in particular a low performance field bus and/or PLC) is used. Moreover, the invention enables the application response time to be short even for bus systems with high network complexity (e.g., multiple devices on the same field bus and/or branched field bus). Furthermore, the invention also enables usage of low performance hardware which executes the application with a high cycle time while achieving a similar application response time. The invention also enables an application to be executed on a bus system that was previously, i.e. without the scheduling unit, not possible with this bus system. Thus, the invention enables an improvement in the application execution for widely varying bus systems.

In general, the field bus can also be configured as EthernetlP, EtherCAT, Profibus, Profinet, OPC UA FX, TSN and/or the like instead of a Sercos bus (e.g. Sercos II or Sercos III).

The first and second devices can be field devices, particularly sensors (e.g. temperature sensors, light curtains, scanners, and the like). The first target equipment can also be a field device and can e.g. be a sensor, an actor or an actor comprising a sensor. The first target equipment can be a motor controller, for example. In particular, the first device can also be the first target device (for instance in a scenario where the first device is an actor comprising a sensor). It is understood that, in principle, any device which is configured to provide and transmit device data (e.g. the second device, a third device etc.) can also be a respective target device. In a further example, the first device can be the first target equipment which is in turn configured to be controlled by output data on basis of the second device data of the second device. The controller can be a PLC (Programmable Logic Controller). The first and second devices, the controller and the first target equipment can be connected to the same field bus. Also, different field busses (e.g. using different hardware and/or field bus protocols) can be used to connect the devices, the controller and/or the first target equipment.

Advantageous embodiments of the invention are given in the subclaims, the specification and the figures.

According to a first advantageous embodiment, the scheduling unit can comprise a memory component on which the impact parameters can be stored, in particular by the manufacturer. Alternatively or additionally, the scheduling unit can be configured such that the impact parameters can be defined, in particular during commissioning of the bus system. Further alternatively or additionally, the scheduling unit can be configured to obtain the impact parameters from the first device and/or the at least second device and/or the controller and/or the first target equipment and/or the field bus. Even further alternatively or additionally, the scheduling unit can be configured to derive the impact parameters from a mathematical model of the bus system and/or a static device description in form of an .xml file, which can be stored on the memory component, for example.

According to another advantageous embodiment, the impact parameters can comprise information about the first device (e.g. about a first device preparation time and/or a first module sample time) and/or the second device (e.g. about a second device preparation time and/or a second module sample time) and/or the controller and/or the first target equipment (e.g. an output data applying time) and/or the field bus and/or the scheduling unit itself. In particular, the impact parameters can comprise - alternatively or additionally - information about an output data computation time (processing time) of the controller. As described subsequently, the controller can be configured to compute and transmit output data based on transmitted device data. Thereby, the controller can be further configured to have output data ready for transmission on the field bus after an output data computation time. The information can include how much time the respective participant needs for a particular action (e.g. with regard to the controller, the duration of the output data computation time, with regard to the first device, the duration of the first device preparation time etc.). Furthermore, the information can include one or more dependencies between participants of the bus system. For instance, such information can describe, that the second device data, in particular at least in part, has no impact on the first target equipment. Moreover, such information can describe that controlling the first target equipment is based first on the first device data and thereafter on the second device data. Alternatively or additionally, the impact parameters can comprise information on travel times and/or transmission speeds of the bus system, which can be particularly advantageous in extended bus systems where travel times can have a significant impact on bus system performance. In particular in a bus system with cascaded network topologies and different transmission speeds considering travel times and/or transmission speeds can be particular advantageous: For instance, when two frames travers in tandem from a slower to a faster media, the frames occupy less time on the faster media. Therefore, gaps will occur which can be used for transmission of other data that would otherwise be transmitted later. On the other hand, when two frames traverse in tandem from a faster to a slower media, the frames occupy more time on the slower media, wherefore the second frame is queued. Therefore, the second frame can be scheduled later without affecting the latency respectively the response time of the application connected to this data, wherein other data can be transmitted in the meantime instead. Thus, the scheduling unit can be configured to improve the performance of the bus system by considering travel times and/or transmission speeds.

According to another advantageous embodiment, the first device can be configured to provide the first device data ready for transmission after a first device preparation time. The second device can be configured to provide the second device data ready for transmission after a second device preparation time. In particular, the device preparation times, which are examples of impact parameters described herein, can be different. Furthermore, the scheduling unit can be configured to determine the device preparation times. For instance, the first device and the second device can be configured to communicate their respective device preparation time to the scheduling unit.

According to another advantageous embodiment, at least one of the devices can comprise a first module configured to acquire and transmit first input data, and at least a second module configured to acquire and transmit at least second input data. Furthermore, the at least one of the devices can comprise an IO bus link, configured to receive (RX) and serialize the first input data and/or the second input data transmitted by the first module and/or the second module. Therefore, the at least one of the devices can comprise an internal bus, for example. The IO bus link can be also configured to transmit data to the first module and/or the second module. The at least one of the devices can further comprise a field bus interface, configured to transmit the device data of the at least one of the devices on the field bus. Therein, the serialized input data can form a part of the device data of the at least one of the devices. The field bus interface can be further configured to receive data from the field bus, which data can be transmitted by the IO bus link to the first module and/or the second module. Moreover, the first module can be configured to have the first input data ready for transmission after a first module sample time, and the second module can be configured to have the second input data ready for transmission after a second module sample time. In particular, the module sample times, which are examples of impact parameters described herein, can be different. Furthermore, the scheduling unit can be configured to determine the module sample times. For instance, the at least one of the devices can be configured to communicate its respective module sample time to the scheduling unit.

According to another advantageous embodiment, the first module can comprise a first sensor and/or the second module can comprise a second sensor, wherein each sensor can be connected to the respective module via sensor cables. The first module can be configured to sample a first sensor signal of the first sensor to acquire the first input data, and/or the second module can be configured to sample a second sensor signal of the second sensor to acquire the second input data. At least one of the sensors can comprise a probe which can be configured to be controlled, in particular by the output data.

According to another advantageous embodiment, the controller can be configured to compute and transmit first output data based on the transmitted first device data and/or second output data based on the transmitted second device data. The controller can be further configured to have the first output data ready for transmission on the field bus after a first output data computation time and/or the second output data ready for transmission on the field bus after a second output data computation time. In particular, the output data computation times, which are examples of impact parameters described herein, can be different. Furthermore, the scheduling unit can be configured to determine the output data computation times. For instance, the controller can be configured to communicate the respective output data computation time to the scheduling unit.

According to another advantageous embodiment, the first target equipment can be configured to be controlled by applying the transmitted first output data and/or the transmitted second output data. The first target equipment can be further configured to have the first output data applied after a first output data applying time and/or the second output data applied after a second output data applying time. In particular, the output data applying times, which are examples of impact parameters described herein, can be different. Furthermore, the scheduling unit can be configured to determine the output data applying times. For instance, the first target equipment can be configured to communicate the respective output data applying time to the scheduling unit.

According to another advantageous embodiment, the scheduling unit can be configured to determine the module sample times and/or the device preparation times and/or the output data computation times and/or the output data applying times and/or the one or more dependencies between participants of the bus system, and to schedule the execution of the application considering the module sample times and/or the device preparation times and/or the output data computation times and/or the output data applying times and/or the one or more dependencies between the respective participants of the bus system. In general, the scheduling unit can be advantageously configured to schedule the execution of the application considering the impact parameters in such a way to enable a short latency respectively the application response time to be short.

According to another advantageous embodiment, the scheduling unit can be configured to schedule the transmission of the device data on the field bus in the order of the module sample times and/or the device preparation times and/or the output data computation times and/or the output data applying times. Alternatively or additionally, the scheduling unit can be configured to schedule the transmission of the input data to the IO bus link in the order of the module sample times and/or the device preparation times and/or the output data computation times and/or the output data applying times. Further alternatively or additionally, the scheduling unit can be configured to schedule the computation of the output data, and in particular the transmission of the output data on the field bus, in the order of the module sample times and/or the device preparation times and/or the output data computation times and/or the output data applying times.

In ordinary bus systems, the applying of computed outputs (output cycle) and the acquiring of input data (input cycle) are synchronized, wherein the input cycle and the output cycle are strongly linked together. Therefore, even if all outputs are already computed, their transmission may be artificially delayed until a time determined by the aforementioned synchronization. According to another advantageous embodiment, the scheduling unit can be configured to schedule the transmission of the first output data and the second output data on the field bus upon computation of both the first output data and the second output data, thus independent from the input cycle. For example, the first output data and the second output can be transmitted at the moment they are both calculated and ready for transmission. Thus, the transmission upon computation makes the transmission of the output data independent from the timing for the acquisition of the device data and the input data, respectively, what eliminates such an artificial delay as described above. Alternatively or additionally, the scheduling unit can be configured to schedule the transmission of one of the output data on the field bus upon computation of the one of the output data, in particular before computation of the other output data. For example, the first output data can be transmitted at the moment the first output data is computed and ready for transmission although the second output data has not yet been computed. Further alternatively or additionally, the scheduling unit can be configured to schedule the computation of one of the output data, e.g., the first output data, and in particular the transmission of the one of the output data on the field bus, even if the controller has not yet received all device data or input data. For instance, once all output data for controlling the first target equipment (e.g. for a drive control-word, set position, IO output values and/or commands to activate a sensor/touch probe of the first target equipment) is computed, it can be already transmitted on the field bus even though input/device data required to compute output data for another, e.g. a second target equipment, is not yet available to the controller. Therefore, it can be advantageous to determine dependencies between participants of the bus system, in particular dependencies between device and/or input data and output data. Thus, the scheduling unit can be configured, e.g., to determine such dependencies from the mathematical model of the bus system, and/or that such impact parameters can be defined, in particular during commissioning of the bus system. Furthermore, a user program code, in particular recursive user program code, which can be executed on the controller can be split into individual compute blocks, e.g., one compute block for computation of the first output data from the first device data and one compute block for computation of the second output data from the second device data, wherein the respective computation can only start if all required device/input data is available to the controller. Moreover, the scheduling unit can be configured to schedule the execution of the compute blocks considering the impact parameters, in particular the dependencies between the respective participants of the bus system (such as the dependencies between device and/or input data and output data), in order to enable the application response time to be short. It is understood that also all these embodiments enable the application response time to be short.

According to another advantageous embodiment, the scheduling unit can be configured to schedule the execution of the application in a cyclically repetitive manner, which can simplify the scheduling of the application execution by the scheduling unit.

According to another advantageous embodiment, the controller can comprise the scheduling unit, which enables a compact configuration of the bus system

According to another advantageous embodiment, the controller can be configured to sequentially compute the output data from the device data. Thereby, the controller processes the device data sequentially as blocks, wherein the device data can represent a respective block and/or the individual input data of the respective device data can represent a respective block.

According to another advantageous embodiment, the bus system can comprise at least a data forwarder, wherein the data forwarder is configured to transmit the beginning of a data block, e.g., the first and/or second device data, the first and/or second input data or the first and/or second output data, even though it has not yet received the end of the respective data block. Thereby, the data forwarder can be configured to work between two separate fieldbus levels of the bus system (e.g. between two Sercos buses) and/or between an IO-bus level (e.g. of the first device) and a fieldbus level (e.g. the Sercos bus). This also enables the application response time to be short, since it is not necessary to wait until the end of the data block arrives at the data forwarding point before forwarding. It is understood that this is particularly advantageous for a data forwarder that only forwards data and does not aggregate it.

The invention further relates to a method for scheduling an execution of at least one application, in particular for industrial automation, on a bus system. The bus system comprises: a first device, in particular a first sensing device, configured to provide and transmit first device data, at least a second device, in particular a second sensing device, configured to provide and transmit second device data, a controller configured to compute output data from the device data, at least a first target equipment configured to be controlled by the output data, a field bus, in particular a Sercos bus, and a scheduling unit for scheduling the execution of the application, wherein the devices, the controller and the first target equipment are connected via the field bus for communication with the scheduling unit. Alternatively or additionally, the bus system can be set out as disclosed herein. The method comprises the following steps performed by the scheduling unit: determining impact parameters which impact an application response time of the bus system, and scheduling the execution considering the impact parameters.

In general, the details of the bus system according to the invention are correspondingly applicable to the method according to the invention, this applies in particular with regard to embodiments and advantages. Furthermore, it is understood that all features mentioned herein can be combined with each other, unless explicitly stated otherwise. It is also understood that all features mentioned herein for one direction (e.g. from the devices to the controller to the first target equipment) can also be applied to the other direction (e.g. from first target equipment to the controller to the devices). Further, one or more of the devices described herein (e.g. the first device, the at least second device) may each or in a combination constitute a target equipment as described herein.

The invention is described below exemplarily with reference to the figures. It schematically shows
- Fig. 1: a bus system,
- Fig. 2: a flow diagram illustrating data traffic on the bus system of Fig. 1,
- Fig. 3: a flow diagram illustrating data traffic on an ordinary bus system, and
- Fig. 4: another flow diagram illustrating data traffic on the bus system of Fig. 1.

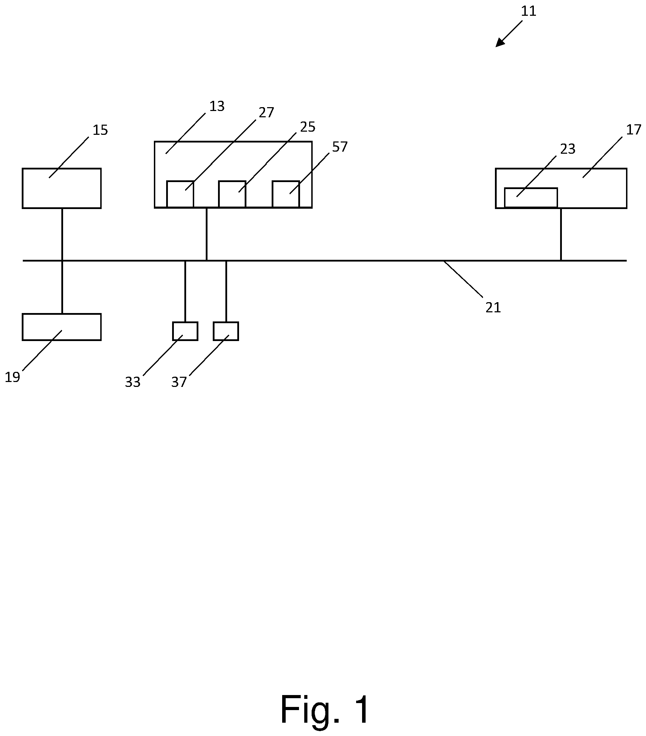

Fig. 1 shows a bus system 11 for industrial automation, e.g., for execution of a milling machine application comprising milling of a hole with predefined depth and diameter in a workpiece.

The bus system 11 comprises a first device 13 formed as a first sensing device configured to provide and transmit first device data 29, and a second device 15 formed as a second sensing device configured to provide and transmit second device data 31. The bus system 11 further comprises a third device 33 formed as a third sensing device configured to provide and transmit third device data 35, and a fourth device 37 formed as a fourth sensing device configured to provide and transmit fourth device data 39.

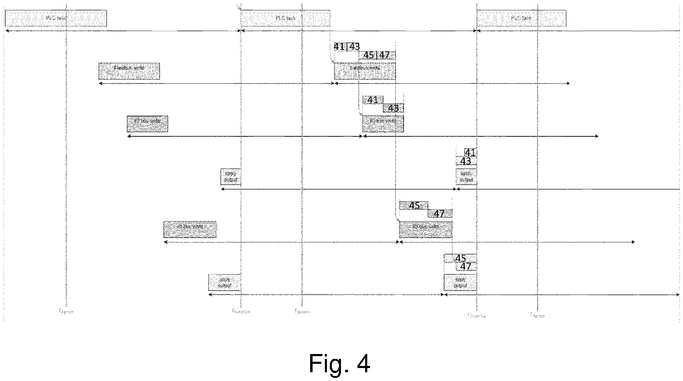

Moreover, the bus system 11 comprises a controller 17 for computation of output data 41, 43, 45, 47 (shown in Fig. 4) from the device data 29, 31, 35, 39. Therefore, the controller 17 is configured to run processes A, B, C and D (indicated by reference numerals 65, 67, 69 and 71). It is understood that there can be any number of input data, processes and output data as well as any permutations of these in order to compute output data from input data. For example, one process could also be used to compute one output data from two input data. The bus system 11 further comprises a first target equipment 19 which in this example is formed as a milling machine controllable by the output data 41, 43. The controller 17 comprises a computing unit 61 configured to run the processes A, B, C and D and a field bus receive/transmit unit 63 as communication interface. For example, the controller 17 can be formed as a programmable logic controller. Moreover, program execution of the application can be run on the controller 17.

Furthermore, the bus system 11 comprises a scheduling unit 23 for scheduling the execution of the application, wherein the controller 17 also comprises the scheduling unit 23. The bus system 11 further comprises a field bus 21 formed as a Sercos bus, wherein the sensing devices 13, 15, 33, 37, the controller 17 and the milling machine 19 are connected via the Sercos bus 21 for communication. The scheduling unit 23 is configured for communication with the controller 17 via internal connections, wherein the controller 17 in turn communicates with the sensing devices 13, 15, 33, 37 and the milling machine 19 via the Sercos bus 21. Alternatively, the scheduling unit 23 can be connected with the sensing devices 13, 15, 33, 37, the controller 17 and the milling machine 19 via the Sercos bus 21.

Furthermore, alternatively or additionally, the scheduling unit 21 can be integrated in an engineering system that can be connected to the controller 17, and in particular to the sensing devices 13, 15, 33, 37 and the milling machine 19, via other wire connections (typically via an ethernet connection between the controller 17 and a computer (PC) acting as engineering station) or other means, e.g. wireless. However, the scheduling unit 23 can also be configured as a standalone product which is connected to the controller 17, and in particular to the sensing devices 13, 15, 33, 37 and the milling machine 19. Thereby, the scheduling unit 23 is configured to determine impact parameters which impact an application response time of the bus system 11 resp. of the application, and to schedule the execution of the application considering the impact parameters. Therein, the scheduling unit 23 is configured to schedule the execution of the application in a highly repetitive cyclic manner. It is understood that the scheduling unit 23 is configured to schedule the execution of the application, considering the impact parameters, in such a way that deterministic operation of the bus system 11 can be ensured.

Therefore, the scheduling unit 23 is configured to obtain the impact parameters from the participants of the bus system 11, i.e., the sensing devices 13, 15, 33, 37, the controller 17, the milling machine 19 and the Sercos bus 21. Additionally, the scheduling unit 23 comprises a memory component (not shown) on which the impact parameters are stored after their determination. Alternatively or additionally, the impact parameters can be stored by the manufacturer and/or the scheduling unit 23 can be configured that the impact parameters can be defined during commissioning of the bus system 11. Additionally, the scheduling unit 23 is configured to derive the impact parameters from a mathematical model of the bus system 11, which is also stored on the memory component.

Here, the impact parameters comprise information about the sensing devices 13, 15, 33, 37, the controller 17, the milling machine 19 and the Sercos bus 21. Therein, the information includes how much time each respective participant needs for a particular action. Furthermore, the information includes dependencies between the sensing devices 13, 15, 33, 37 and the milling machine 19, wherein the dependencies are derived from the mathematical model. Alternatively or additionally, the impact parameters can comprise information on travel times and/or transmission speeds of the bus system 11.

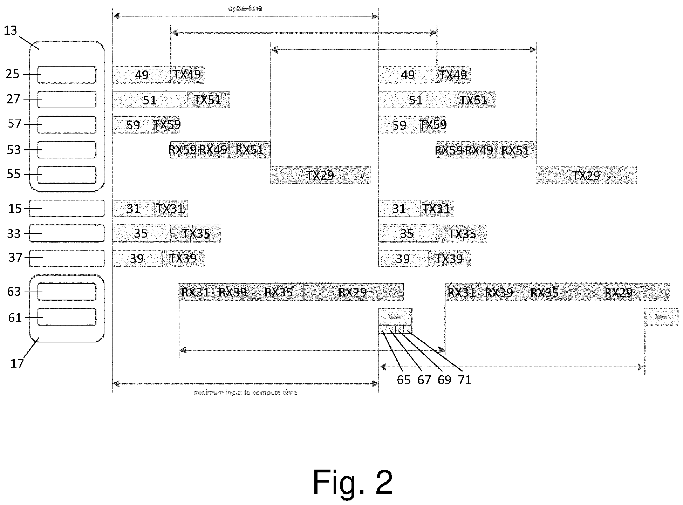

Moreover, the first sensing device 13 is configured to provide the first device data 29 ready for transmission after a first device preparation time (in Fig. 2 indicated by the start, i.e. left side, of bar TX29 which bar illustrates the transmission of the first device data 29 on the Sercos bus 21). The second sensing device 15 is configured to provide the second device data 31 ready for transmission after a second device preparation time (in Fig. 2 indicated by the start of bar TX31 which bar illustrates the transmission of the second device data 31 on the Sercos bus 21). The third and fourth sensing devices 33, 37 are configured to provide the third and fourth device data 35, 39 ready for transmission after a third and fourth device preparation time, respectively (in Fig. 2 indicated by the start of the bar TX35 and TX39, respectively, which bars illustrate the transmission of the third device data 35 and the fourth device data 39, respectively, on the Sercos bus 21). Furthermore, the scheduling unit 23 is configured to determine the device preparation times. Therefore, the sensing devices 13, 15, 33, 37 are configured to communicate their respective device preparation time to the scheduling unit 23. Hereby, the device preparation times of the sensing devices 13, 15, 33, 37, which are comprised by the impact parameters, are different.

In addition, with reference to Fig. 2, the first sensing device 13 comprises a first module 25 configured to acquire and transmit a first input data 49, a second module 27 configured to acquire and transmit a second input data 51, and a third module 57 configured to acquire and transmit a third input data 59. Furthermore, the first sensing device 13 comprises an IO bus link 53, configured to receive and serialize the first input data 49 and/or the second input data 51 and/or the third input data 59 transmitted by the first module 25 and/or the second module 27 and/or the third module 57 (in Fig. 2 receiving and serialization indicated by the bars RX49, RX51 and RX59, respectively). The IO bus link 53 can be further configured to transmit data to the modules 25, 27, 57. The first sensing device 13 further comprises a field bus interface 55, configured to transmit the first device data 29 on the Sercos bus 21 (in Fig. 2 transmittal indicated by the bar TX29). Thereby, the serialized input data 49, 51, 59 forms a part of the first device data 29 of the first sensing device 13. However, it is also possible that one of the input data 49, 51, 59, e.g., the first input data 49, is scheduled to be sent before the other input data 49, 51, 59, e.g., the second input data 51 and the third input data 59 of the first sensing device 13 - then, the first input data 49 forms a part of the first device data 29 of the first sensing device 13, and the second input data 51 and the third input data 59 form a part of later first device data 29 of the first sensing device 13. The field bus interface 55 can be further configured to receive data from the Sercos bus 21, which data can be transmitted by the IO bus link 53 to the modules 25, 27, 57.

Moreover, the first module 25 is configured to have the first input data 49 ready for transmission after a first module sample time, the second module 27 is configured to have the second input data 51 ready for transmission after a second module sample time, and the third module 57 is configured to have the third input data 59 ready for transmission after a third module sample time. Furthermore, the scheduling unit 23 is configured to determine the module sample times of the modules 25, 27, 57. Therefore, the first sensing device 13 is configured to communicate the module sample times to the scheduling unit 23. Here, the module sample times of the modules 25, 27, 57, which are comprised by the impact parameters, are different. In Fig. 2, the respective module sample time is indicated by the length of the bar of the respective input data 49, 51 and 59.

Furthermore, the first module 25 comprises a first sensor (not shown) and the second module 27 comprises a second sensor (not shown). The first module 25 is configured to sample a first sensor signal of the first sensor to acquire the first input data, and the second module 27 is configured to sample a second sensor signal of the second sensor to acquire the second input data. Similarly, the third module 57 comprises a third sensor (not shown), wherein the third module 57 is configured to sample a third sensor signal of the third sensor to acquire the third input data 59.

Here, the first sensor is configured to capture a depth of the hole to be milled, and the second sensor is configured to capture a pressure in a compressed air pipe (not shown). The third sensor is configured to capture a sharpness of a tool (not shown) of the milling machine 19. The second sensing device 15 comprises a fourth sensor (not shown) and is configured to capture input data related to a width of the hole to be milled by means of the fourth sensor as a basis for the second device data 31.The third sensing device 33 comprises a fifth sensor (not shown) and is configured to capture input data related to a room temperature at an area surrounding the bus system 11 by means of the fifth sensor as a basis for the third device data 35. The fourth sensing device 37 comprises a sixth sensor (not shown) and is configured to capture input data related to an air humidity at an area surrounding the bus system 11 by means of the sixth sensor as a basis for the fourth device data 39.

Furthermore, the third and fourth sensing device 33, 37 each comprise an IO bus link (not shown), configured to receive and serialize the input data of the third and fourth sensing device 33, 37, respectively. The third and fourth sensing device 33, 37 each further comprise a field bus interface (not shown), configured to transmit the third and fourth device data 35, 39 on the Sercos bus 21 (in Fig. 2 transmittal indicated by the bars TX35 and TX39, respectively). Thereby, the serialized input data of the third and fourth sensing device 33, 37 forms a part of the third and fourth device data 35, 39, respectively. The respective field bus interface can be further configured to receive data from the Sercos bus 21. The respective IO bus link can be further configured to transmit such data to the fifth and sixth sensor, respectively. Also, the milling machine 19 comprises a field bus interface (not shown), configured to receive output data via the Sercos bus 21. The milling machine 19 further comprises an IO bus link (not shown), configured to transmit such output data, e.g., to a drive unit (not shown) of the milling machine for applying the output data.

In this example, the controller 17 is configured to receive the transmitted device data 29, 31, 35, 39 (in Fig. 2 receiving indicated by the bars RX29, RX31, RX35 and RX39, respectively) and to compute and transmit first output data 41 based on the transmitted first device data 29 and/or second output data 43 based on the transmitted second device data 31 and/or third output data 45 based on the transmitted third device data 35 and/or fourth output data 47 based on the transmitted fourth device data 39. The controller 17 is further configured to have the first output data 41 ready for transmission after a first output data computation time and/or the second output data 43 ready for transmission after a second output data computation time and/or the third output data 45 ready for transmission after a third output data computation time and/or the fourth output data 47 ready for transmission after a fourth output data computation time. Furthermore, the scheduling unit 23 is configured to determine the output data computation times. Therefore, the controller 17 is configured to communicate the respective output data computation time to the scheduling unit 23. Here, the output data computation times, which are comprised by the impact parameters, are different.

The milling machine 19 is configured to be controlled on basis of the captured depth and/or width of the hole to be milled (i.e. by applying the first output data 41 and/or the second output data 43. On the other hand, the third and fourth device data 33, 37, relating to the room temperature and the air humidity, respectively, are not used to control the milling machine 19. Moreover, the third input data 59 is also not used to control the milling machine 19 regarding the milling of the hole, but to determine a point of time for renewal of the tool. The second input data 51 is also not used to control the milling machine 19. As already mentioned, these dependencies, i.e., how does which sensing device 13, 15, 33, 37 affect the milling machine 19, are also comprised by the impact parameters and derived from the mathematical model by the scheduling unit 23.

The milling machine 19 is further configured to have the first output data 41 applied after a first output data applying time, i.e., adjusted the tool with respect to the depth of the hole to be milled, and/or configured to have the second output data 43 applied after a second output data applying time, i.e., adjusted the tool with respect to the width of the hole to be milled. Furthermore, the scheduling unit 23 is configured to determine the output data applying times of the milling machine 19. Therefore, the milling machine 19 is configured to communicate the first and second output data applying time to the scheduling unit 23. Here, the first and second output data applying times, which are comprised by the impact parameters, are different. Moreover, here, the milling machine 19 is configured to adjust the tool first with respect to the depth of the hole to be milled and then with respect to the width of the hole to be milled - also this dependency is comprised by the impact parameters and derived from the mathematical model by the scheduling unit 23.

Thus, the scheduling unit 23 is configured to determine the module sample times, the device preparation times, the output data computation times, the output data applying times and the dependencies between the sensing devices 13, 15, 33, 37 and the milling machine 19.

Fig. 2 shows a flow diagram illustrating that the scheduling unit 23 is configured to schedule the transmission of the device data 29, 31, 35, 39 in the order of the device preparation times. Hence, the scheduling unit 23 is configured to schedule the execution of the application, i.e., the milling of the hole, considering the device preparation times of the devices 13, 15, 33, 37. As a result, the device data 29, 31, 35, 39 is not transmitted only after all the device data 29, 31, 35, 39 is ready for transmission, what enables the application response time to be short. Alternatively or additionally, the scheduling unit can be configured to schedule the transmission of the device data in the order of the module sample times and/or the output data computation times and/or the output data applying times. However, one potential criterion which may be considered in defining the starting time for the transmission on the bus system 11 to avoid occurrence of gaps without data traffic on the Sercos bus 21 in order to minimize the time reserved for scheduled data transmission so that one amount of time can be available for other data transmissions (e.g. acyclic data). For a Sercos bus, as in the present case, where in general only one slot can be defined for the unified communication channel, and acknowledgement telegram and measurement data telegram are also in one block, this means to start the transfer of the first device just in time so that the transfer of the last device starts right after the data of the last device is ready for transmission, but ensure for all other devices that their transfer does not start before their data is available. Of course, the scheduling unit 23 can be configured accordingly to encompass this criterion, in particular by knowing the device preparation times.

Additionally, the scheduling unit 23 is configured to schedule the transmission of the input data 49, 51 ,59 to the IO bus link 53 in the order of the module sample times. Hence, the scheduling unit 23 is configured to schedule the execution of the application, i.e., the milling of the hole, considering the module sample times. This in turn has the advantage that the input data 49, 51 ,59 is not transmitted only after all the input data 49, 51 ,59 is ready for transmission, what enables the application response time to be short. Alternatively or additionally, the scheduling unit can be configured to schedule the transmission of the input data input data 49, 51 ,59 to the IO bus link 53 in the order of the device preparation times and/or the output data computation times and/or the output data applying times.

The scheduling unit 23 is further configured to schedule the computation of the output data 43, 47, 45 and 41 in the order of the device preparation times of the corresponding device data 31, 39, 35 and 29, respectively. Alternatively or additionally, the scheduling unit 23 can be configured to schedule the computation of the output data 41, 43, 45, 47 in the order of the module sample times and/or the output data computation times and/or the output data applying times.

Additionally, the scheduling unit 23 is configured to schedule the computation of the output data 43, 47, 45 from the device data 31, 39, 35, even not yet having received the complete first device data 29, what enables the application response time to be short. The controller 17 is configured to sequentially compute the output data 41, 43, 45, 47 from the device data 29, 31, 35, 39, i.e., the controller 17 processes the device data 29, 31, 35, 39 sequentially as blocks, wherein the device data 29, 31, 35, 39 can represent a respective block and/or the input data 49, 51, 59 can represent a respective block. In principle, the bus system 11 can comprise at least a data forwarder, that can be configured to transmit the beginning of a data block, e.g., of the first device data 29, the first input data 49 or the first output data 41, even though it has not yet received the end of the data block.

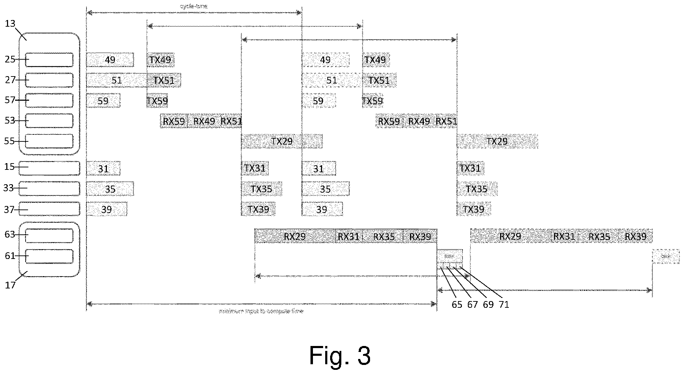

In contrast, Fig. 3 shows a flow diagram illustrating data traffic on an ordinary bus system. As can be seen, the input data 49, 51 ,59, as well as the device data 29, 31, 35, 39 are transmitted only after all the respective data is ready for transmission, which leads to latencies of the data and a high application response time. Furthermore, output data is computed from the device data 29, 31, 35, 39 only after all the device data 29, 31, 35, 39 has been received. However, this also leads to latencies of the data and a high application response time. Since no impact parameters are determined and considered, there is of course no scheduling or prioritization of data transmission and/or data computation in the sense of the invention.

Fig. 4 shows a flow diagram illustrating that the scheduling unit 23 is configured to schedule the transmission of the first output data 41 and the second output data 43 on the Sercos bus 21 before the transmission of the third output data 45 and the fourth output data 47 on the Sercos bus 21. Therefore, the scheduling unit 23 is configured to consider the dependency that the milling machine 19 is controlled by applying only the first output data 41 and/or the second output data 43 by prioritizing the transmission of the first output data 41 and second output data 43, which enables the application response time to be short. Moreover, the scheduling unit 23 can be configured to schedule IO bus link of the milling machine 19 to write the transmitted output data 41, 43 before the complete output data 41, 43, 45, 47 has been transmitted on the Sercos bus 21. This also enables the application response time to be short, because the output data 41, 43 can be applied earlier. It is understood that the scheduling unit 23 can in principle be configured to schedule any IO bus link or field bus interface of the bus system 11 to write transmitted output data (in particular output data pertaining the participant comprising this IO bus link or field bus interface) before the complete output data (i.e. also output data that do not pertain the participant comprising this IO bus link or field bus interface) has been transmitted on the field bus 21, to enable the application response time to be short.

Moreover, the scheduling unit 23 can be configured to schedule the transmission of the output data 41, 43, 45, 47 on the Sercos bus 21 upon computation of the respective output data 41, 43, 45, 47 - for example, the output data 41 can be transmitted on the Sercos bus 21 at the moment it is computed and ready for transmission.

Alternatively, the scheduling unit 23 can be configured to schedule the transmission of the output data 41, 43, 45, 47 on the Sercos bus 21 upon computation of the complete output data 41, 43, 45, 47. For example, the output data 41, 43, 45, 47 can be transmitted at the moment they are all calculated and ready for transmission.

As mentioned above, here, the milling machine 19 is configured to adjust the tool first with respect to the depth of the hole to be milled (captured by the second sensing device 15) and then with respect to the width of the hole to be milled (captured by the first sensing device 13). Therefore, the scheduling unit 23 can be configured - alternatively or additionally - to schedule the computation of the second output data 43, and in particular the transmission of the second output data 43 on the Sercos bus 21, even if the controller 17 has not yet received the first device data 29, to consider this dependency between the first sensing device 13, the second sensing device 15 and the milling machine 17. This also enables the application response time to be short.

Furthermore, as already mentioned, here, the third and fourth device data 33, 37, relating to the room temperature and the air humidity, respectively, as well as the second and third input data 51, 59, are not used to control the milling machine 19. Therefore, the scheduling unit 23 can be configured to consider this dependency between the sensing devices 13, 15, 33, 37 and the milling machine 17 by - alternatively or additionally - being configured to schedule the transmission of the first input data 49 such that the first input data 49 is transmitted in a separate data block before the second and third input data 51, 59 is transmitted. Then, the first output data 41 can be computed earlier from the first input data 49, which enables the application response time to be short.

Moreover, as shown in Fig. 4, the second output data applying time is longer than the first output data applying time (the respective output data applying time is indicated by the length of the respective "apply-output" bar 41 or 43). Thus, it can be advantageously to prioritize the computation of the second output data 43 and its transmission. Therefore, the scheduling unit 23 can be configured to consider the output data applying times by - alternatively or additionally - being configured to schedule the controller 17 to compute and transmit the second output data 43 first before computation of the other output data 41, 45, 47, which enables the application response time to be short. Furthermore, the scheduling unit 23 can be configured - alternatively or additionally - to consider the output data applying times by - alternatively or additionally - being configured to schedule the transmission of the first input data 49 such that the first input data 49 is transmitted in a separate data block before the second and third input data 51, 59 are transmitted. That is, the first device data 29 then comprises the first input data 49, whereas the second and third input data 51, 59 are then comprised by first device data 29 sent later. Thus, the first output data 41 can be computed earlier from the first input data 49, which enables the application response time to be short.

Furthermore, a user program code, in particular recursive user program code, which can be executed on the controller 17 can be split into individual compute blocks, e.g., one compute block for computation of the first output data 41 from the first device data 29, one compute block for computation of the second output data 43 from the second device data 31, one compute block for computation of the third output data 45 from the third device data 35 and one compute block for computation of the fourth output data 47 from the fourth device data 39, wherein the respective computation can only start if all device/input data required for the respective computation is available to the controller 17. Moreover, the scheduling unit 23 can be configured to schedule the execution of the compute blocks considering the impact parameters, in particular the dependencies between the respective participants of the bus system 11.

### List of reference numerals

- 11: bus system
- 13: first device
- 15: second device
- 17: controller
- 19: first target equipment
- 21: field bus
- 23: scheduling unit
- 25: first module
- 27: second module
- 29: first device data
- 31: second device data
- 33: third device
- 35: third device data
- 37: fourth device
- 39: fourth device data
- 41: first output data
- 43: second output data
- 45: third output data
- 47: fourth output data
- 49: first input data
- 51: second input data
- 53: IO bus link
- 55: field bus interface
- 57: third module
- 59: third input data
- 61: computing unit
- 63: field bus receive/transmit unit
- 65: process A
- 67: process B
- 69: process C
- 71: process D

## Claims

1. A field bus system (11) for execution of at least one application, in particular for industrial automation, comprising:
a first device (13), in particular a first sensing device, configured to provide and transmit first device data (29),
at least a second device (15), in particular a second sensing device, configured to provide and transmit second device data (31),
a controller (17) configured to compute output data (41, 43) from the device data (29, 31),
at least a first target equipment (19) configured to be controlled by the output data (41, 43),
a field bus (21), as an example a Sercos bus, and
a scheduling unit (23) for scheduling the execution of the application,
wherein the devices (13, 15), the controller (17) and the first target equipment (19) are connected via the field bus (21) for communication with the scheduling unit (23), and
wherein the scheduling unit (23) is configured to determine impact parameters which impact an application response time of the bus system (11), and to schedule the execution considering the impact parameters.

2. The field bus system (11) of claim 1,
wherein the scheduling unit (23) comprises a memory component on which the impact parameters are stored, in particular by the manufacturer, and/or
wherein the scheduling unit (23) is configured such that the impact parameters can be defined during commissioning of the bus system (11), and/or
wherein the scheduling unit (23) is configured to obtain the impact parameters from the first device (13), the at least second device (15), the controller (17), the first target equipment (19), and/or the field bus (21), and/or
wherein the scheduling unit (23) is configured to derive the impact parameters from a mathematical model of the bus system (11).

3. The field bus system (11) of claim 1 or 2,
wherein the impact parameters comprise information about the first device (13), the second device (15), the controller (17), in particular about an output data computation time of the controller (17), the first target equipment (19), the field bus (21), and/or information on travel times and/or transmission speeds of the bus system (11).

4. The field bus system (11) of any one of the preceding claims,
wherein the first device (13) is configured to provide the first device data (29) ready for transmission after a first device preparation time,
wherein the second device (15) is configured to provide the second device data (31) ready for transmission after a second device preparation time,
wherein the device preparation times are different, and
wherein the scheduling unit (23) is configured to determine the device preparation times.

5. The field bus system (11) of any one of the preceding claims,
wherein at least one of the devices (13, 15) comprises:
a first module (25) configured to acquire and transmit first input data (49),
at least a second module (27) configured to acquire and transmit at least second input data (51),
an IO bus link (53), configured to receive and serialize the first input data (49) and/or the second input data (51) transmitted by the first module (25) and/or the second module (27), and
a field bus interface (55), configured to transmit the device data (29, 31) of the least one of the devices (13, 15) on the field bus (21), wherein the serialized input data (49, 51) form a part of the device data (29, 31) of the at least one of the devices (13, 15),
wherein the first module (25) is configured to have the first input data (49) ready for transmission after a first module sample time,
wherein the second module (27) is configured to have the second input data (51) ready for transmission after a second module sample time, wherein the module sample times are different, and
wherein the scheduling unit (23) is configured to determine the module sample times.

6. The field bus system (11) of claim 5,
wherein the first module (25) comprises a first sensor and the second module (27) comprises a second sensor, wherein the first module (25) is configured to sample a first sensor signal of the first sensor to acquire the first input data (49), and wherein the second module (27) is configured to sample a second sensor signal of the second sensor to acquire the second input data (51).

7. The field bus system (11) of any one of the preceding claims,
wherein the controller (17) is configured to compute and transmit first output data (41) based on the transmitted first device data (29) and/or second output data (43) based on the transmitted second device data (31), wherein the controller (17) is configured to have the first output data (41) ready for transmission after a first output data computation time and/or the second output data (43) ready for transmission after a second output data computation time,
wherein the output data computation times are different, and
wherein the scheduling unit (23) is configured to determine the output data computation times.

8. The field bus system (11) of claim 7,
wherein the first target equipment (19) is configured to be controlled by applying the transmitted first output data (41) and/or the transmitted second output data (43),
wherein the first target equipment (19) is configured to have the first output data (41) applied after a first output data applying time and/or the second output data (43) applied after a second output data applying time,
wherein the output data applying times are different, and
wherein the scheduling unit (23) is configured to determine the output data applying times.

9. The field bus system (11) of at least one of claims 4 to 8,
wherein the scheduling unit (23) is configured to schedule the transmission of the device data (29, 31) in the order of the module sample times, the device preparation times, the output data computation times, and/or the output data applying times, and/or
wherein the scheduling unit (23) is configured to schedule the transmission of the input data (49, 51) to the IO bus link (53) in the order of the module sample times, the device preparation times, the output data computation times, and/or the output data applying times, and/or
wherein the scheduling unit (23) is configured to schedule the computation of the output data (41, 43), and in particular the transmission of the output data (41, 43) on the field bus (21), in the order of the module sample times, the device preparation times, the output data computation times, and/or the output data applying times.

10. The field bus system (11) of claim 9,
wherein the scheduling unit (23) is configured to schedule the transmission of the output data (41, 43) on the field bus (21) upon computation of all output data (41, 43), or
wherein the scheduling unit (23) is configured to schedule the transmission of the first output data (41) on the field bus (21) upon computation of the first output data (41), in particular before computation of the second output data (43), and/or
wherein the scheduling unit (23) is configured to schedule the computation of the first output data (41), and in particular the transmission of the first output data (41) on the field bus (21), even if not yet having received the complete second input data (51).

11. The field bus system (11) of any one of the preceding claims,
wherein the scheduling unit (23) is configured to schedule the execution of the application in a cyclically repetitive manner.

12. The field bus system (11) of any one of the preceding claims,
wherein the controller (17) comprises the scheduling unit (23).

13. The field bus system (11) of any one of the preceding claims,
wherein the controller (17) is configured to sequentially compute the output data (41, 43) from the device data (29, 31).

14. The field bus system (11) of any one of the preceding claims,
wherein the bus system (11) comprises at least a data forwarder, wherein the data forwarder is configured to transmit the beginning of a data block even though it has not yet received the end of the data block.

15. A method for scheduling an execution of at least one application, in particular for industrial automation, on a field bus system (11), the field bus system (11) comprising:
a first device (13), in particular a first sensing device, configured to provide and transmit first device data (29),
at least a second device (15), in particular a second sensing device, configured to provide and transmit second device data (31),
a controller (17) configured to compute output data (41, 43) from the device data (29, 31),
at least a first target equipment (19) configured to be controlled by the output data (41, 43),
a field bus (21), in particular a Sercos bus, and
a scheduling unit (23) for scheduling the execution of the application,
wherein the devices (13, 15), the controller (17) and the first target equipment (19) are connected via the field bus (21) for communication with the scheduling unit (23),
wherein the method comprises the following steps performed by the scheduling unit (23):
determining impact parameters which impact an application response time of the bus system (11), and
scheduling the execution considering the impact parameters.

## Amended claims

### Amended claims in accordance with Rule 137(2) EPC.

1. A field bus system (11) for execution of at least one application, in particular for industrial automation, comprising:
a first device (13), in particular a first sensing device, configured to provide and transmit first device data (29),
at least a second device (15), in particular a second sensing device, configured to provide and transmit second device data (31),
a controller (17) configured to compute output data (41, 43) from the device data (29, 31),
at least a first target equipment (19) configured to be controlled by the output data (41, 43),
a field bus (21), as an example a Sercos bus, and
a scheduling unit (23) for scheduling the execution of the application,
wherein the devices (13, 15), the controller (17) and the first target equipment (19) are connected via the field bus (21) for communication with the scheduling unit (23), and
wherein the scheduling unit (23) is configured to determine impact parameters which impact an application response time of the bus system (11), and to schedule the execution considering the impact parameters
wherein the first device (13) is configured to provide the first device data (29) ready for transmission after a first device preparation time,
wherein the second device (15) is configured to provide the second device data (31) ready for transmission after a second device preparation time,
wherein the device preparation times are different, and
wherein the scheduling unit (23) is configured to determine the device preparation times,
wherein at least one of the devices (13, 15) comprises:
a first module (25) configured to acquire and transmit first input data (49),
at least a second module (27) configured to acquire and transmit at least second input data (51),
an IO bus link (53), configured to receive and serialize the first input data (49) and/or the second input data (51) transmitted by the first module (25) and/or the second module (27), and
a field bus interface (55), configured to transmit the device data (29, 31) of the least one of the devices (13, 15) on the field bus (21), wherein the serialized input data (49, 51) form a part of the device data (29, 31) of the at least one of the devices (13, 15),
wherein the first module (25) is configured to have the first input data (49) ready for transmission after a first module sample time,
wherein the second module (27) is configured to have the second input data (51) ready for transmission after a second module sample time,
wherein the module sample times are different, and
wherein the scheduling unit (23) is configured to determine the module sample times,
wherein the first module (25) comprises a first sensor and the second module (27) comprises a second sensor, wherein the first module (25) is configured to sample a first sensor signal of the first sensor to acquire the first input data (49), and wherein the second module (27) is configured to sample a second sensor signal of the second sensor to acquire the second input data (51),
wherein the controller (17) is configured to compute and transmit first output data (41) based on the transmitted first device data (29) and/or second output data (43) based on the transmitted second device data (31),
wherein the controller (17) is configured to have the first output data (41) ready for transmission after a first output data computation time and/or the second output data (43) ready for transmission after a second output data computation time,
wherein the output data computation times are different, and
wherein the scheduling unit (23) is configured to determine the output data computation times,
wherein the first target equipment (19) is configured to be controlled by applying the transmitted first output data (41) and/or the transmitted second output data (43),
wherein the first target equipment (19) is configured to have the first output data (41) applied after a first output data applying time and/or the second output data (43) applied after a second output data applying time,
wherein the output data applying times are different, and
wherein the scheduling unit (23) is configured to determine the output data applying times,
wherein the scheduling unit (23) is configured to schedule the transmission of the device data (29, 31) in the order of the module sample times, the device preparation times, the output data computation times, and/or the output data applying times, and/or
wherein the scheduling unit (23) is configured to schedule the transmission of the input data (49, 51) to the IO bus link (53) in the order of the module sample times, the device preparation times, the output data computation times, and/or the output data applying times, and/or wherein the scheduling unit (23) is configured to schedule the computation of the output data (41, 43), and in particular the transmission of the output data (41, 43) on the field bus (21), in the order of the module sample times,
the device preparation times, the output data computation times, and/or the output data applying times.

2. The field bus system (11) of claim 1,
wherein the scheduling unit (23) comprises a memory component on which the impact parameters are stored, in particular by the manufacturer, and/or wherein the scheduling unit (23) is configured such that the impact parameters can be defined during commissioning of the bus system (11), and/or wherein the scheduling unit (23) is configured to obtain the impact parameters from the first device (13), the at least second device (15), the controller (17), the first target equipment (19), and/or the field bus (21), and/or wherein the scheduling unit (23) is configured to derive the impact parameters from a mathematical model of the bus system (11).

3. The field bus system (11) of claim 1 or 2,
wherein the impact parameters comprise information about the first device (13), the second device (15), the controller (17), in particular about an output data computation time of the controller (17), the first target equipment (19), the field bus (21), and/or information on travel times and/or transmission speeds of the bus system (11).

4. The field bus system (11) of claim 1,
wherein the scheduling unit (23) is configured to schedule the transmission of the output data (41, 43) on the field bus (21) upon computation of all output data (41, 43), or
wherein the scheduling unit (23) is configured to schedule the transmission of the first output data (41) on the field bus (21) upon computation of the first output data (41), in particular before computation of the second output data (43), and/or
wherein the scheduling unit (23) is configured to schedule the computation of the first output data (41), and in particular the transmission of the first output data (41) on the field bus (21), even if not yet having received the complete second input data (51).

5. The field bus system (11) of any one of the preceding claims,
wherein the scheduling unit (23) is configured to schedule the execution of the application in a cyclically repetitive manner.

6. The field bus system (11) of any one of the preceding claims,
wherein the controller (17) comprises the scheduling unit (23).

7. The field bus system (11) of any one of the preceding claims,
wherein the controller (17) is configured to sequentially compute the output data (41, 43) from the device data (29, 31).

8. The field bus system (11) of any one of the preceding claims,
wherein the field bus system (11) comprises at least a data forwarder,
wherein the data forwarder is configured to transmit the beginning of a data block even though it has not yet received the end of the data block.

9. A method for scheduling an execution of at least one application, in particular for industrial automation, on a field bus system (11), the field bus system (11) comprising:
a first device (13), in particular a first sensing device, configured to provide and transmit first device data (29),
at least a second device (15), in particular a second sensing device, configured to provide and transmit second device data (31),
a controller (17) configured to compute output data (41, 43) from the device data (29, 31),
at least a first target equipment (19) configured to be controlled by the output data (41, 43),
a field bus (21), in particular a Sercos bus, and
a scheduling unit (23) for scheduling the execution of the application,
wherein the devices (13, 15), the controller (17) and the first target equipment (19) are connected via the field bus (21) for communication with the scheduling unit (23),
wherein the method comprises the following steps performed by the scheduling unit (23):
determining impact parameters which impact an application response time of the bus system (11), and
scheduling the execution considering the impact parameters,
wherein the first device (13) is configured to provide the first device data (29) ready for transmission after a first device preparation time,
wherein the second device (15) is configured to provide the second device data (31) ready for transmission after a second device preparation time,
wherein the device preparation times are different, and
wherein the scheduling unit (23) is configured to determine the device preparation times,
wherein at least one of the devices (13, 15) comprises:
a first module (25) configured to acquire and transmit first input data (49), at least a second module (27) configured to acquire and transmit at least second input data (51),
an IO bus link (53), configured to receive and serialize the first input data (49) and/or the second input data (51) transmitted by the first module (25) and/or the second module (27), and
a field bus interface (55), configured to transmit the device data (29, 31) of the least one of the devices (13, 15) on the field bus (21), wherein the serialized input data (49, 51) form a part of the device data (29, 31) of the at least one of the devices (13, 15),
wherein the first module (25) is configured to have the first input data (49) ready for transmission after a first module sample time,
wherein the second module (27) is configured to have the second input data (51) ready for transmission after a second module sample time,
wherein the module sample times are different, and
wherein the scheduling unit (23) is configured to determine the module sample times,
wherein the first module (25) comprises a first sensor and the second module (27) comprises a second sensor, wherein the first module (25) is configured to sample a first sensor signal of the first sensor to acquire the first input data (49), and wherein the second module (27) is configured to sample a second sensor signal of the second sensor to acquire the second input data (51),
wherein the controller (17) is configured to compute and transmit first output data (41) based on the transmitted first device data (29) and/or second output data (43) based on the transmitted second device data (31),
wherein the controller (17) is configured to have the first output data (41) ready for transmission after a first output data computation time and/or the second output data (43) ready for transmission after a second output data computation time,
wherein the output data computation times are different, and
wherein the scheduling unit (23) is configured to determine the output data computation times,
wherein the first target equipment (19) is configured to be controlled by applying the transmitted first output data (41) and/or the transmitted second output data (43),
wherein the first target equipment (19) is configured to have the first output data (41) applied after a first output data applying time and/or the second output data (43) applied after a second output data applying time,
wherein the output data applying times are different, and
wherein the scheduling unit (23) is configured to determine the output data applying times,
wherein the scheduling unit (23) is configured to schedule the transmission of the device data (29, 31) in the order of the module sample times, the device preparation times, the output data computation times, and/or the output data applying times, and/or
wherein the scheduling unit (23) is configured to schedule the transmission of the input data (49, 51) to the IO bus link (53) in the order of the module sample times, the device preparation times, the output data computation times, and/or the output data applying times, and/or
wherein the scheduling unit (23) is configured to schedule the computation of the output data (41, 43), and in particular the transmission of the output data (41, 43) on the field bus (21), in the order of the module sample times,
the device preparation times, the output data computation times, and/or the output data applying times.
